# EUROPÄISCHE PATENTANMELDUNG

(11) **EP 2 413 473 A2**
(43) Veröffentlichungstag der Anmeldung: **01.02.2012**
(21) Anmeldenummer: 11172269.0
(22) Anmeldetag: 30.06.2011
(51) Int. Cl.: H02K 1/18, H02K 23/04

(54) **Elektrische Maschine**

(30) Priorität: 27.07.2010 DE 102010038449
(71) Anmelder: Robert Bosch GmbH, 70442 Stuttgart (DE)
(72) Erfinder: Seidel, Maik, 31177 Harsum (DE); Ribeiro, Helio, CEP 13026-026 Campinas, Sao Paulo,BR (BR); Schulz, Eduardo, 71640 Ludwigsburg (DE)

(57) **Zusammenfassung**

Eine elektrische Maschine weist ein Gehäuse auf, an dem mindestens ein Magnetfeldelement angeordnet ist, das über mindestens eine Haltefeder an der Innenwand des Gehäuses gehalten ist. Die Haltefeder weist einen gewölbten Halteabschnitt auf, der in Umfangsrichtung auf das mindestens eine Magnetfeldelement eine Haltekraft ausübt.

## Beschreibung

Die Erfindung bezieht sich auf eine elektrische Maschine nach dem Oberbegriff des Anspruches 1.

### Stand der Technik

In der DE 30 48 337 A1 wird eine elektrische Maschine beschrieben, die an der Innenwand des Gehäuses gewölbte Permanentmagnete aufweist, welche mittels Haltefedern befestigt sind. Die Haltefedern sind jeweils zwischen zwei benachbarten Permanentmagneten angeordnet und besitzen einen rechteckförmigen, offenen Querschnitt, wobei seitliche Schenkel der Haltefeder in Umfangsrichtung gegen den jeweils benachbarten Permanentmagneten drücken. Unter Ausnutzung des Gewölbeeffekts wird hierdurch eine sichere Halterung der Permanentmagnete an der Innenwand des Gehäuses erreicht.

Um eine ausreichend hohe Haltekraft bereitzustellen, müssen die Schenkel der Haltefeder eine verhältnismäßig hohe Kraft in Umfangsrichtung erzeugen, was eine entsprechende Spannung der Schenkel voraussetzt.

### Offenbarung der Erfindung

Der Erfindung liegt die Aufgabe zu Grunde, mit einfachen konstruktiven Maßnahmen eine elektrische Maschine so auszubilden, dass ein oder mehrere Magnetfeldelemente sicher am Gehäuse gehalten sind.

Diese Aufgabe wird erfindungsgemäß mit den Merkmalen des Anspruches 1 gelöst. Die Unteransprüche geben zweckmäßige Weiterbildungen an.

Die erfindungsgemäße elektrische Maschine - ein Elektromotor oder ein elektrischer Generator - weist in einem Gehäuse mindestens ein Magnetfeldelement auf, über das ein Magnetfeld erzeugbar ist oder das Magnetfeldlinien leitet. Bei dem Magnetfeldelement handelt es sich somit um einen Permanentmagneten oder um einen Polschuh. Gemäß bevorzugter Ausführung sind mehrere derartiger Magnetfeldelemente an der Innenseite des Gehäuses, bei welchem es sich insbesondere um ein Polgehäuse handelt, angeordnet. Hierbei kommen sowohl Polschuhe als auch Permanentmagnete in Betracht, vorzugsweise dergestalt, dass eine Mehrzahl von Permanentmagneten über den Umfang der Innenseite des Gehäuses verteilt angeordnet sind und einem oder mehreren der Permanentmagnete, insbesondere jedem Permanentmagneten ein Polschuh zugeordnet ist.

Bei der elektrischen Maschine handelt es sich insbesondere um einen Gleichstrommotor, wobei ggf. auch eine Anwendung auf Wechselstrommotoren in Betracht kommt.

Das Magnetfeldelement ist über mindestens eine Haltefeder an der Innenwand des Gehäuses gehalten, wobei die Haltefeder einen gewölbten Halteabschnitt aufweist, über den maßgeblich oder ausschließlich die in Umfangsrichtung auf das Magnetfeldelement wirkende Haltekraft erzeugt wird. Der Kontakt zwischen dem Halteabschnitt der Haltefeder und dem Magnetfeldelement erstreckt sich über eine definierte axiale Länge des Magnetfeldelementes. Gemäß vorteilhafter Ausführung besteht ein Kontakt über die gesamte axiale Länge der Haltefeder, die über die gesamte oder über einen wesentlichen Teil der axialen Länge des Magnetfeldelementes an diesem anliegt.

Auf Grund der Ausführung mit dem gewölbten Halteabschnitt ist sichergestellt, dass die Haltefeder unter eine hohe Eigenspannung gesetzt werden kann und somit eine entsprechend hohe Haltekraft in Umfangsrichtung auf das Magnetfeldelement zur Halterung dieses Bauteils an der Innenwand des Gehäuses aufbringen kann. Hierbei ist insbesondere die Gefahr reduziert, dass die Spannung bzw. die Haltekraft über die Lebensdauer der elektrischen Maschine signifikant nachlässt. Es ist somit über einen langen Betriebszeitraum eine ausreichend hohe Haltekraft gewährleistet.

Ein weiterer Vorteil liegt in der über die axiale Länge des Halteabschnitts gleichmäßig ausgeübten Haltkraft. Der Halteabschnitt kann über die axiale Länge mit einer gleichmäßigen Wölbung versehen sein, so dass eine gleichmäßige Kraftübertragung gewährleistet ist. Vorteilhafterweise verläuft die Kontaktlinie zwischen dem Halteabschnitt und dem Magnetfeldelement geradlinig, insbesondere parallel zur Längsachse der elektrischen Maschine.

Gemäß einer zweckmäßigen Ausführung ist die konvex gewölbte Seite des Halteabschnitts der Innenwand des Gehäuses abgewandt. Diese Ausführung hat den Vorteil, dass die konvexe Seite des Halteabschnitts zugleich einen Schutz vor Verschmutzungen bzw. Ablagerungen bietet. Außerdem können Befestigungselemente, über die die Haltefeder mit der Innenwand des Gehäuses verbunden ist, von der gewölbten Seite des Halteabschnitts überdeckt werden.

Gemäß einer weiteren vorteilhaften Ausführung ist die Haltefeder als ein Hohlkörper ausgebildet, wobei eine Wandseite des Hohlkörpers den gewölbten Halteabschnitt bildet. Der Hohlkörper besitzt insbesondere im Bereich des gewölbten Halteabschnitts einen zumindest annähernd ovalen Querschnitt, wobei ggf. die dem Halteabschnitt gegenüberliegende Querschnittslängsseite eine geringere Wölbung aufweisen kann oder geradlinig ausgebildet ist. Über die Querschnittsschmalseiten, welche eine höhere Krümmung aufweisen, ist der gewölbte Halteabschnitt mit der gegenüberliegenden Querschnittslängsseite verbunden. Der Kontakt zwischen dem Halteabschnitt und dem Magnetfeldelement erfolgt vorzugsweise im Übergangsbereich zwischen dem Halteabschnitt und der Querschnittsschmalseite. Gegebenenfalls kommt auch ein Kontakt im mittigen Bereich der Querschnittsschmalseite in Betracht.

Die Ausführung als Hohlkörper erlaubt eine verbesserte Handhabbarkeit, insbesondere bei der Montage. Außerdem ist die Stabilität der Haltefeder verbessert. Die der gewölbten Halteseite gegenüberliegende Querschnittslängsseite kann zur Befestigung der Haltefeder an der Innenseite des Gehäuses herangezogen werden.

Gemäß einer weiteren zweckmäßigen Ausführung besitzt der Hohlkörper auf der dem gewölbten Halteabschnitt abgewandten Querschnittslängsseite eine sich über die axiale Länge des Hohlkörpers erstreckende Ausnehmung. Der Hohlköper ist somit in Achsrichtung geschlitzt ausgebildet, was den Vorteil bringt, dass die Haltefeder beim Einbau in die elektrische Maschine durch radiales Zusammendrücken unter Vorspannung gesetzt werden kann.

Der Schlitz bzw. die offene Nut an der Querschnittslängsseite kann zudem für die Befestigung der Haltefeder an der Innenwand des Gehäuses genutzt werden. Im Bereich des Schlitzes bzw. der Nut kann ein Befestigungselement ausgebildet sein, das beispielsweise als eine verbreiterte Ausnehmung ausgeführt ist, die auf einen Vorsprung an der Innenwandseite des Gehäuses aufzuschieben ist.

Gemäß einer weiteren zweckmäßigen Ausführung ist an einer Stirnseite der Haltefeder ein Axialsicherungsteil zur Axialsicherung mindestens eines Magnetfeldelementes angeordnet. Über das Axialsicherungsteil an der Haltefeder wird das Magnetfeldelement in Achsrichtung am Gehäuse in Position gehalten, so dass der Haltefeder zusätzlich zur Erzeugung einer in Umfangsrichtung wirkenden Haltekraft auch eine axiale Sicherungsfunktion zukommt.

Es kann zweckmäßig sein, in die Mantelfläche des Magnetfeldelementes eine seitliche Vertiefung zur Aufnahme eines Abschnitts der Haltefeder einzubringen, so dass ein formschlüssiger Kontakt zwischen der Haltefeder und dem Magnetfeldelement gegeben ist und die Richtung der Haltekraft auch unter erschwerten Einsatzbedingungen immer in Umfangsrichtung weist.

Weitere Vorteile und zweckmäßige Ausführungen sind den weiteren Ansprüchen, der Figurenbeschreibung und den Zeichnungen zu entnehmen. Es zeigen:
- Fig. 1: einen Starter mit einem elektrischen Startermotor für eine Brennkraftmaschine in einem Längsschnitt,
- Fig. 2: ein Polgehäuse eines Elektromotors mit an der Innenwand anliegenden Permanentmagneten und Polschuhen, welche über Haltefedern am Polgehäuse gehalten sind,
- Fig. 3: die zu einem Ring angeordneten Permanentmagnete, Polschuhe und Haltefedern ohne Polgehäuse,
- Fig. 4: eine Haltefeder, die als Hohlkörper ausgebildet ist, in perspektivischer Einzeldarstellung,
- Fig. 5: die Haltefeder in montierter Position an der Innenwand des Polgehäuses,
- Fig. 6: eine Ansicht auf die Innenwand des Polgehäuses,
- Fig. 7: Ausbuchtungen bzw. Vertiefungen an den Seitenwänden der Magnete und Polschuhe,
- Fig. 8: ein Polgehäuse mit an der Innenseite angeordneten Permanentmagneten, Polschuhen und Haltefedern in einem Längsschnitt.

In den Figuren sind gleiche Bauteile mit gleichen Bezugszeichen versehen.

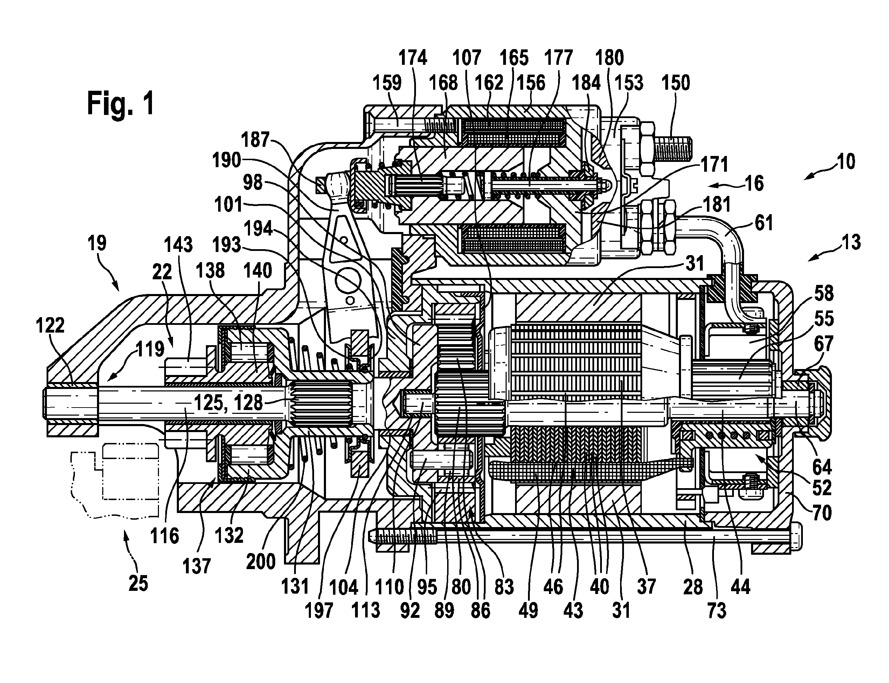

In Fig. 1 ist eine Startvorrichtung 10 im Längsschnitt dargestellt. Die Startvorrichtung 10 weist beispielsweise einen Startermotor 13 und ein Einrückrelais 16 auf. Der Startermotor 13 und das Einrückrelais 16 sind an einem gemeinsamen Antriebslagerschild 19 befestigt. Der Startermotor 13 dient funktionell dazu, ein Andreh- bzw. Starterritzel 22 anzutreiben, wenn es im Zahnkranz 25 der hier nicht dargestellten Brennkraftmaschine eingespurt ist.

Der Startermotor 13 weist als Gehäuse ein Polrohr bzw. Polgehäuse 28 auf, das an seinem Innenumfang Permanentmagnete 31 trägt. Zusätzlich zu den Permanentmagneten 31 können auch Polschuhe zum Leiten der Magnetfeldlinien vorgesehen sein; die Permanentmagnete 31 und die Polschuhe bilden jeweils Magnetfeldelemente. Die Permanentmagnete 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem Andrehritzel 22 abgewandten Ende der Antriebswelle 44 ist des weiteren ein Kommutator 52 angebracht, der unter anderem aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem Einspurrelais 16 und dem Startermotor 13 angeordnete Stromzuführung 61 versorgt im Einschaltzustand die Kohlebürsten 58 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatordeckel 70 wiederum wird mittels Zuganker 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polrohr 28 am Antriebslagerschild 19 ab, und der Kommutatorlagerdeckel 70 am Polrohr 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlager 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist, ab. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer sogenannten Geradverzahnung 125 (Innenverzahnung), die Teil einer sogenannten Wellen-Nabe-Verbindung ist. Diese Welle-Nabe-Verbindung 128 ermöglicht in diesem Fall das axial geradlinige Gleiten eines Mitnehmers 131. Dieser Mitnehmer 131 ist ein hülsenartiger Fortsatz, der einstückig mit einem topfförmigen Außenring 132 des Freilaufs 137 ist. Dieser Freilauf 137 (Richtgesperre) besteht des Weiteren aus dem Innenring 140, der radial innerhalb des Außenrings 132 angeordnet ist. Zwischen dem Innenring 140 und dem Außenring 132 sind Klemmkörper 138 angeordnet. Diese Klemmkörper 138 verhindern in Zusammenwirkung mit dem Innen- und dem Außenring eine Relativdrehung zwischen dem Außenring und dem Innenring in einer zweiten Richtung. Mit anderen Worten: Der Freilauf 137 ermöglicht eine Relativbewegung zwischen Innenring 140 und Außenring 132 nur in eine Richtung. In diesem Ausführungsbeispiel ist der Innenring 140 einstückig mit dem Andrehritzel 22 und dessen Schrägverzahnung 143 (Außenschrägverzahnung) ausgeführt. Das Andrehritzel 22 kann alternativ auch als geradverzahntes Ritzel ausgeführt sein.

Nachfolgend wird auf den Einspurmechanismus eingegangen. Das Eindrückrelais 16 weist einen Bolzen 150 auf, der ein elektrischer Kontakt ist und der an den Pluspol einer elektrischen Starterbatterie, die hier nicht dargestellt ist, angeschlossen ist. Dieser Bolzen 150 ist durch einen Relaisdeckel 153 hindurchgeführt. Dieser Relaisdeckel 153 schließt ein Relaisgehäuse 156 ab, das mittels mehrerer Befestigungselemente 159 (Schrauben) am Antriebslagerschild 19 befestigt ist. Im Einrückrelais 16 ist weiterhin eine Einzugswicklung 162 und eine sogenannte Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, so dass eine am zu den Kontakten 180 und 181 Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat darüber hinaus die Aufgabe, mit einem Zugelement 187 einen dem Antriebslagerschild 19 drehbeweglich angeordneten Hebel zu bewegen. Dieser Hebel 190, üblicherweise als Gabelhebel ausgeführt, umgreift mit zwei hier nicht dargestellten Zinken an ihrem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in den Zahnkranz 25 einzuspuren.

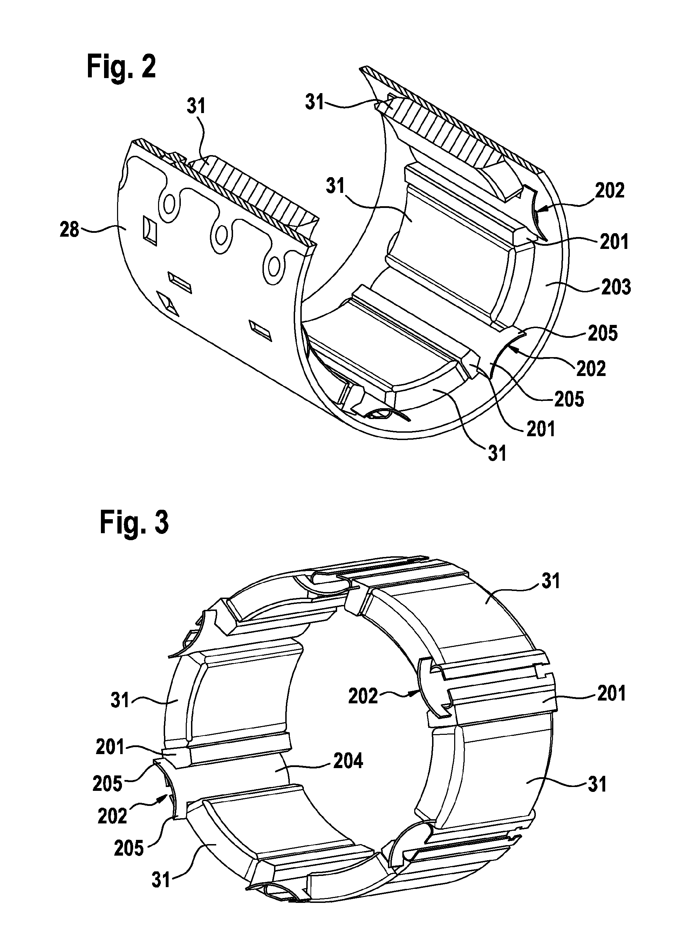

In Fig. 2 ist das Polgehäuse 28 mit den an der Innenwand 203 angeordneten Permanentmagneten 31 sowie Polschuhen 201 in Einzeldarstellung gezeigt. In Umfangsrichtung reihen sich abwechselnd Permanentmagnete 31 und Polschuhe 201 aneinander, wobei jeweils ein Polschuh 201 einem Permanentmagneten 31 zugeordnet und unmittelbar benachbart zum Permanentmagneten angeordnet ist. Die Permanentmagnete 31 weisen in Umfangsrichtung eine größere Breite auf als die stabförmig ausgebildeten Polschuhe 201; Permanentmagnete 31 und Polschuhe 201 besitzen aber die gleiche axiale Länge, gesehen in Achsrichtung des Elektromotors mit dem Polgehäuse 28.

Jeweils ein Permanentmagnet 31 und ein Polschuh 201 bilden ein zusammengehörendes Paar, wobei benachbarte Paare von Permanentmagneten 31 und Polschuhen 201 über Haltefedern 202 kraftbeaufschlagt sind. Jede Haltefeder 202 übt in Umfangsrichtung Haltekräfte aus und liegt an einer Seite an einem Polschuh 201 und an der anderen Seite an einem Permanentmagneten 31 an. Die Haltefeder 202 erstreckt sich hierbei über die gesamte axiale Länge der Permanentmagnete 31 bzw. Polschuhe 201.

Die Haltefeder 202 weist einen gewölbten Halteabschnitt 204 auf, dessen konvex gewölbte Seite radial nach innen weist. Die Haltefeder 202 besteht vorzugsweise aus Metall, wobei ggf. auch Ausführungen aus anderen Materialien, beispielsweise Kunststoff in Betracht kommen.

Die konvexe Wölbung des Halteabschnittes 204 der Haltefeder 202 überdeckt den Zwischenraum zwischen benachbarten Polschuhen 201 und Permanentmagneten 31 vollständig, wobei auf Grund der nach innen gerichteten Wölbung des Halteabschnittes 204 der Zwischenraum vor einer Verschmutzung gesichert ist und außerdem ein Aufnahmeraum für Halteelemente zur Sicherung der Haltefeder am Polgehäuse 28 gegeben ist, wobei die Halteelemente von dem Halteabschnitt 204 überdeckt sind.

Die Haltefeder 202 übt zum einen in Umfangsrichtung auf benachbarte Magnete bzw. Polschuhe eine Haltekraft aus, zum andern sichert die Haltefeder 202 Polschuhe bzw. Magnete, welche unmittelbar an der Haltefeder anliegen, gegen eine axiale Verschiebung. Hierfür weist die Haltefeder 202 an einer axialen Stirnseite seitlich überstehende Flügel 205 auf, welche Axialsicherungsteile bilden und jeweils eine Stirnseite eines benachbarten Polschuhs 201 bzw. Permanentmagneten 31 übergreifen. Somit kann der betreffende Polschuh 201 bzw. Permanentmagnet 31 in diese Achsrichtung nicht verschoben werden. In Gegenrichtung können zusätzliche Axialsicherungsmaßnahmen vorgesehen sein, beispielsweise Erhöhungen bzw. Erhebungen an der Innenwand 203 des Polgehäuses 28.

In Fig. 3 sind Permanentmagnete 31, Polschuhe 201 sowie Haltefedern 202 in Form eines geschlossenen Rings in Einzeldarstellung gezeigt. Diese Bauteile können zu einer vorgefertigten Baueinheit zusammengefügt und in das Polgehäuse 28 eingeschoben werden.

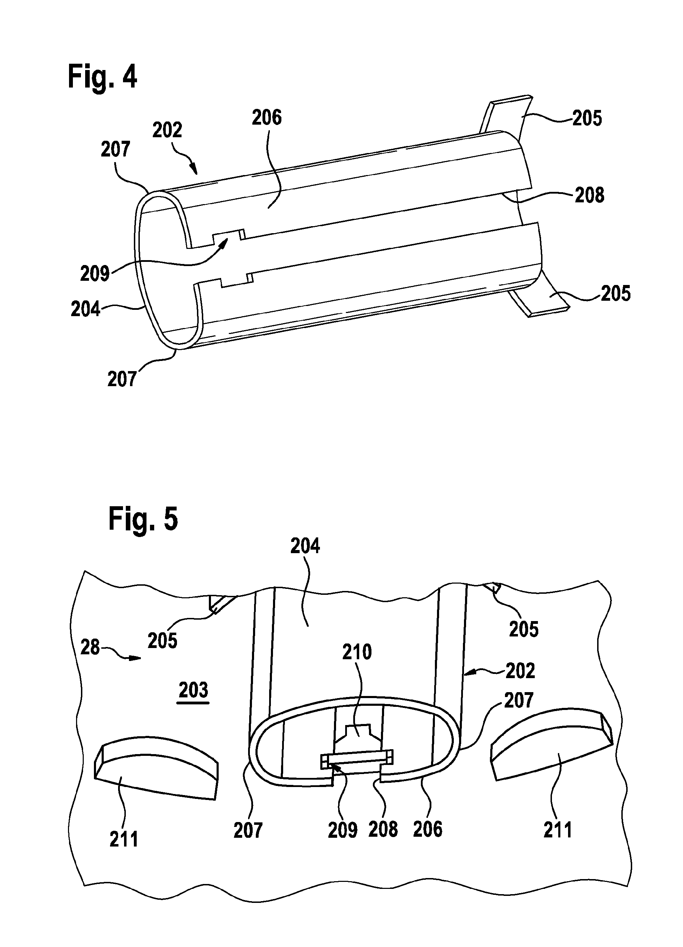

In Fig. 4 ist die Haltefeder 202 in einer perspektivischen Einzeldarstellung gezeigt. Die Haltefeder 202 ist als einteiliger Hohlkörper ausgeführt, bei dem der konvex geformte Halteabschnitt 204 eine Querschnittslängsseite bildet. Die gegenüberliegende Querschnittslängsseite 206 ist eben ausgebildet und über Querschnittsschmalseiten 207 mit dem konvex geformten Halteabschnitt 204 verbunden. Insgesamt weist der Hohlkörper einen näherungsweise ovalen Querschnitt auf, bei dem die beiden einander gegenüberliegenden Querschnittsschmalseiten 207 im eingebauten Zustand auf Kontakt zu einem Polschuh bzw. Permanentmagneten liegen.

Die dem Halteabschnitt 204 gegenüberliegende Querschnittslängsseite 206 weist eine sich über die gesamte axiale Länge erstreckende, nutförmige Ausnehmung 208 auf. In die Ausnehmung 208 ist benachbart zu der Stirnseite, welche den beiden Flügeln 205 gegenüberliegt, ein Befestigungselement 209 in Form einer quer zur Längsachse der Haltefeder sich erstreckenden Ausstanzung eingebracht, über die die Haltefeder 202 im montierten Zustand mit dem Polgehäuse zu verbinden ist. Die Ausstanzungen an beiden Seitenwänden, welche die längsgerichtete Ausnehmung 208 begrenzen, besitzen jeweils einen rechteckförmigen Querschnitt.

Des Weiteren ist Fig. 4 zu entnehmen, dass ich die beiden seitlichen Flügel 205 an einer Stirnseite der Haltefeder in Höhe des konvex geformten Halteabschnittes 204 befinden. Die Flügel 205 bilden somit eine Verlängerung des Halteabschnittes 204, sie ragen jedoch seitlich über die Mantelfläche der Querschnittsschmalseiten 207 hinaus.

In Fig. 5 ist die Haltefeder 202 im montierten Zustand an der Innenwand des Polgehäuses 28 dargerstellt. Einteilig mit der Innenwand ist ein sich erhebendes Befestigungselement 210 ausgebildet, welches mit dem Befestigungselement 209 in Form einer Ausnehmung an der Haltefeder 202 zusammenwirkt. Die Ausnehmung 209 an der Haltefeder 202 kann auf das als Erhebung ausgebildete Befestigungselement 210 an der Innenwand 203 des Polgehäuses 28 aufgeschoben werden. Das Befestigungselement 210 weist mehrere Abschnitte unterschiedlicher Breite auf, wobei der breiteste Abschnitt im montierten Zustand in die Ausnehmungen 208 einragt. Die schmaleren Abschnitte des Befestigungselementes 210 sind kleiner ausgebildet als die Breite der schlitz- bzw. nutförmigen Ausnehmungen 208, so dass die Haltefeder 202 auf das Befestigungselement 209 problemlos soweit aufgeschoben werden kann, bis die breiten Abschnitte des Befestigungselementes 210 in die Ausnehmungen 209 verrastend eingreifen.

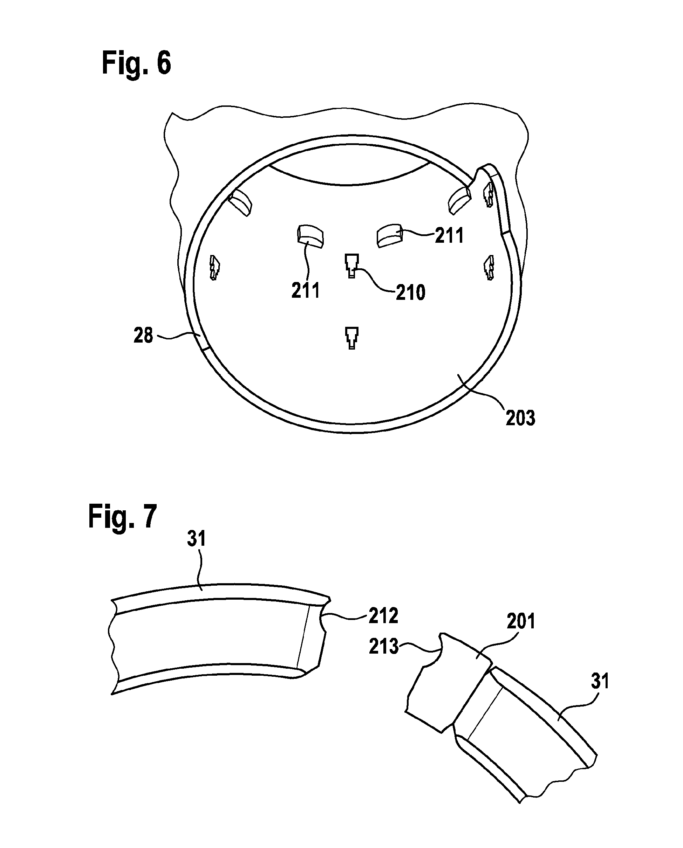

Fig. 5 in Verbindung mit der Innenansicht auf die Innenwand 203 des Polgehäuses 28 gemäß Fig. 6 ist zu entnehmen, dass an der Innenwand 203 zusätzliche, nockenförmige Erhebungen 211 mit seitlichem und axialem Abstand zu dem Befestigungselement 210 angeordnet sind. Diese Erhebungen 211 sind vorteilhafterweise ebenso wie das Befestigungselement 210 einteilig mit der Wandung des Polgehäuses 28 ausgeführt. Die nockenförmigen Erhebungen 211 stellen axiale Begrenzungselemente dar, welche sich im eingebauten Zustand axial auf der den Flügeln 205 gegenüberliegenden Seite befinden und die Permanentmagnete 31 bzw. Polschuhe 201 axial sichern. Somit sind die Permanentmagnete 31 und die Polschuhe 201 axial in beide Richtungen fixiert, nämlich zum einen über die Flügel 205 der Haltefeder 202 und zum andern über die nockenförmigen Erhebungen 211.

Wie Fig. 7 zu entnehmen, weisen die Permanentmagnete 31 und die Polschuhe 201 seitliche Vertiefungen 212 bzw. 213 auf, die der zwischenliegenden Lücke zugewandt sind, in die die Haltefeder eingesetzt wird. Die seitlichen Vertiefungen 212 bzw. 213 dienen zur Aufnahme eines Abschnittes der Haltefeder, insbesondere der beiden diametral gegenüberliegenden Querschnittsschmalseiten 207 (Fig. 4, Fig. 5) der Haltefeder 202. Die seitlichen Vertiefungen 212 bzw. 213 stellen sicher, dass über die gesamte axiale Länge von Permanentmagnet 31 bzw. Polschuh 201 an gleichbleibender radiale Position eine Krafteinleitung von der Haltefeder in Umfangsrichtung auf die Permanentmagnete bzw. Polschuhe stattfindet.

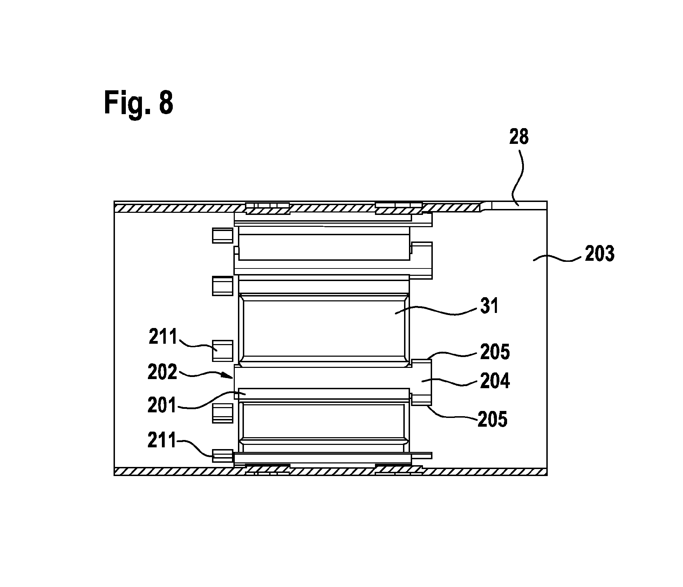

Der Ansicht gemäß Fig. 8 mit einer Darstellung der Innenwand 203 des Polgehäuses 28 einschließlich der montierten Permanentmagnete 31, Polschuhe 201 sowie Haltefedern 202 ist die axiale Sicherung von Polschuhen und Permanentmagneten zu entnehmen, die an einer axialen Stirnseite über die Flügel 205 der Haltefeder 202 und an der gegenüberliegenden axialen Stirnseite über die nockenförmigen Erhebungen 211 realisiert ist.

## Patentansprüche

1. Elektrische Maschine, mit einem Gehäuse, an dem mindestens ein Magnetfeldelement (31, 201) angeordnet ist, das über mindestens eine Haltefeder (202) an der Innenwand (203) des Gehäuses (28) gehalten ist, **dadurch gekennzeichnet, dass** die Haltefeder (202) einen gewölbten Halteabschnitt (204) aufweist, der in Umfangsrichtung auf das mindestens eine Magnetfeldelement (31, 201) eine Haltekraft ausübt.

2. Elektrische Maschine nach Anspruch 1, **dadurch gekennzeichnet, dass** die konvex gewölbte Seite des Halteabschnitts (204) der Innenwand (203) des Gehäuses (28) abgewandt ist.

3. Elektrische Maschine nach Anspruch 1 oder 2, **dadurch gekennzeichnet, dass** die Haltefeder (202) als Hohlkörper ausgebildet ist und der gewölbte Halteabschnitt (204) eine Wandseite des Hohlkörpers bildet.

4. Elektrische Maschine nach Anspruch 3, **dadurch gekennzeichnet, dass** der Hohlkörper auf der dem gewölbten Halteabschnitt (204) abgewandten Seite eine sich über die axiale Länge des Hohlkörpers erstreckende Ausnehmung (208) aufweist.

5. Elektrische Maschine nach Anspruch 3 oder 4, **dadurch gekennzeichnet, dass** der Hohlkörper auf der dem gewölbten Halteabschnitt (204) abgewandten Seite ein Befestigungselement (209) zur Befestigung an der Innenwand (203) des Gehäuses (28) aufweist.

6. Elektrische Maschine nach einem der Ansprüche 3 bis 5, **dadurch gekennzeichnet, dass** der Hohlkörper einen zumindest annähernd ovalen Querschnitt aufweist.

7. Elektrische Maschine nach Anspruch 6, **dadurch gekennzeichnet, dass** zumindest eine Schmalseite (207) des Hohlkörpers an dem Magnetfeldelement (31, 201) anliegt und dieses mit einer Haltekraft beaufschlagt.

8. Elektrische Maschine nach einem der Ansprüche 1 bis 7, **dadurch gekennzeichnet, dass** an einer Stirnseite der Haltefeder (202) ein Axialsicherungsteil (205) zur axialen Sicherung mindestens eines Magnetfeldelements (31, 201) angeordnet ist.

9. Elektrische Maschine nach Anspruch 8, **dadurch gekennzeichnet, dass** das Axialsicherungsteil zwei seitlich überstehende Flügel (205) aufweist.

10. Elektrische Maschine nach einem der Ansprüche 1 bis 9, **dadurch gekennzeichnet, dass** das Magnetfeldelement (31, 201) eine seitliche Vertiefung (212, 213) zur Aufnahme eines Abschnitts der Haltefeder (202) aufweist.

11. Elektrische Maschine nach einem der Ansprüche 1 bis 10, **dadurch gekennzeichnet, dass** zwei benachbarte Magnetfeldelemente (31, 201) von einer gemeinsamen Haltefeder (202) in entgegen gesetzte Umfangsrichtung mit einer Haltekraft beaufschlagt sind.

12. Elektrische Maschine nach einem der Ansprüche 1 bis 11, **dadurch gekennzeichnet, dass** das Magnetfeldelement ein Permanentmagnet (31) ist.

13. Elektrische Maschine nach einem der Ansprüche 1 bis 12, **dadurch gekennzeichnet, dass** das Magnetfeldelement ein Polschuh (201) ist.
